# EUROPÄISCHE PATENTSCHRIFT

(11) **EP 1 502 794 B1**
(45) Veröffentlichungstag und Bekanntmachung des Hinweises auf die Patenterteilung: **12.11.2008**
(21) Anmeldenummer: 04017171.2
(22) Anmeldetag: 21.07.2004
(51) Int. Cl.: B60K 15/04

(54) **Vorrichtung zum Vermeiden einer Fehlbetankung bei Kraftfahrzeugen**
Device for avoiding wrong refuelling in motor vehicles
Dispositif pour éviter un mauvais remplissage de carburant dans des automobiles

(30) Priorität: 01.08.2003 DE 20312178 U; 10.10.2003 DE 20315807 U
(43) Veröffentlichungstag der Anmeldung: 02.02.2005
(73) Patentinhaber: Jost Automotive GmbH, 47802 Krefeld (DE)
(72) Erfinder: Jost, Ingo, (DE)
(74) Vertreter: Müller, Karl-Ernst

(56) Entgegenhaltungen:
- DE-A1- 3 425 461
- DE-A1- 10 037 824
- US-A- 5 474 115
- US-A- 5 562 133

## Beschreibung

Die Erfindung betrifft eine Vorrichtung zur Vermeidung einer Fehlbetankung bei Kraftfahrzeugen mit einem an dem einen Bestandteil des Tankkorpus bei einem Fluidtank in Kraftfahrzeugen bildenden Tankstutzen anzubringenden Einsatz zur Aufnahme einer an die Formgebung des Einsatzes angepaßten Zapfpistole, wobei der ringförmige und an einem an dem Tankstutzen des Tankkorpus befestigten Einfüllstutzen gehalterte Einsatz in seiner Wandung einen die Zapfpistole umschließenden und mit einem in der Zapfpistole angeordneten Schließmechanismus zusammenwirkenden Magneten aufnimmt.

Eine Fehlbetankungsvorrichtung der vorgenannten Art ist aus der US 5 562 133 A bekannt. Der Einsatz der entsprechend beschriebenen Vorrichtung bezieht sich darauf, dass bei mit einer Absaugeinrichtung für die bei der Betankung von Kraftfahrzeugen entstehenden Gase beziehungsweise Dämpfe ausgerüsteten Zapfpistolen die Absaugeinrichtung dann nicht in Funktion treten soll, wenn das Fahrzeug selbst mit einer derartigen Absaugeinrichtung ausgerüstet ist. Die entsprechende Steuerung geschieht über den in dem Einsatz angeordneten Magneten.

Für den Betrieb von insbesondere mit Dieselkraftstoff betriebenen Lastkraftwagen steht zur Rußreduktion die Verwendung von Harnstoff in Vorbereitung, der an Bord der Lastkraftwagen in einem gesonderten Tank mitzuführen ist. Um Fehlbetankungen der für die Kraftstoffe vorgesehenen Tanks mit Harnstoff zu vermeiden, sind Überlegungen angestellt worden, in ähnlicher Weise wie in der gattungsbildenden US 5 562 133 A vorgeschlagen, in dem Tankstutzen üblicherweise aus Metall oder Kunststoff bestehender Tanks für den Harnstoff ein gesondertes Einsatzstück anzuordnen, welches in seiner Wandung einen Ringmagneten trägt; eine in ihrer Formgebung auf die Innenform des Einsatzstücks abgestimmte Zapfpistole soll soweit in den Tankstutzen und in das darin gehalterte Einsatzstück einführbar sein, dass der Ringmagnet die Zapfpistole an einem Bereich umschließt, in welchem in der Zapfpistole ein Schließmechanismus angeordnet sein soll, der ausschließlich durch die Einwirkung des Ringmagneten geöffnet und freigegeben wird. Auf diese Weise sollen Fehlbetankungen von Fluidtanks, die nicht mit einem zugeordneten Einsatzstück versehen sind; mit Harnstoff sicher vermieden sein.

Der Erfindung liegt daher die Aufgabe zugrunde, eine Möglichkeit zu schaffen, einen Fehlbetankungseinsatz in dem Tankstutzen festzulegen, ohne Änderungen an der Bauart von üblichen Fluidtanks vornehmen zu müssen, wobei auch eine Nach- bzw. Umrüstung bestehender, bereits in Lastkraftwagen eingebauter Tanks für die Aufnahme von Harnstoff möglich sein soll.

Die Lösung der Aufgabe ergibt sich jeweils aus den nebengeordneten Ansprüchen 1 und 17; vorteilhafte Ausgestaltungen und Weiterbildungen der Erfindung sind jeweils in den auf die nebengeordneten Ansprüche rückbezogenen Unteransprüchen angegeben.

In einer ersten Ausführungsform sieht die Erfindung vor, dass der Einsatz an einer als ein mit einer Wandung in den Tankstutzen einzusetzendes und sich mit einem an seinem oberen Ende ausgebildeten umlaufenden Flansch am Tankstutzen abstützendes Halsstück ausgebildeten Halterung auswechselbar gehaltert ist, wobei in einem Bereich des Halsstücks Öffnungen zur Aufnahme von Befestigungsmitteln für die auswechselbare Halterung des Einsatzes an dem Halsstück ausgebildet sind, und wobei der die Öffnungen aufnehmende Bereich des Halsstücks von dem Tankstutzen lösbar ist. Mit der Erfindung ist der Vorteil verbunden, dass es möglich ist, den Einsatz mit dem Einfüllstutzen als Einheit zu konzipieren, so dass an dem Tankkorpus selbst keine Veränderungen vorgenommen werden müssen. Gleichzeitig ist es aufgrund der auswechselbaren Halterung des Einsatzes an dem Haltestück gegeben, den Einsatz während der Lebensdauer des Fahrzeuges auszubauen, um beispielsweise den Ringmagneten auszutauschen. Die Erfindung ist jeweils auf alle Fluidtanks, auch in Form von Flüssigkeits- und insbesondere Kraftstofftanks anwendbar.

Soweit die erfindungsgemäße Halterung bei einer Bauart des Tanks mit einem auf den Tankstutzen aufgesetzten und damit verbundenen Einfüllstutzen als Träger eines Verschlußdeckels, wie in der DE 196 47 931 A1 beschrieben, eingesetzt werden soll, ist nach einem Ausführungsbeispiel der Erfindung vorgesehen, daß der obere Flansch des Halsstücks an seinem äußeren umlaufenden Rand einen aufstehenden Rand aufweist und das Halsstück mit einem seinen Rand übergreifenden Einfüllstutzen als Träger eines Verschlußdeckels zu einer auf den Tankstutzen des Tankkorpus aufzusetzenden Baueinheit verbunden ist. In diesem Fall wird also das Halsstück vor der Montage des Einfüllstutzens in den Einfüllstutzen eingesetzt und in geeigneter Weise an seinem äußeren Rand mit dem Einfüllstutzen verbunden.

Soll die so gebildete, aus Halsstück und Einfüllstutzen bestehende Baugruppe an einem Kunststofftank befestigt werden, ist nach einem Ausführungsbeispiel der Erfindung vorgesehen, daß der obere Flansch des Halsstücks auf dem oberen Rand des Tankstutzens aufsitzt und an dem Rand befestigt ist, wobei eine Schraubbefestigung gemäß Ausführungsbeispiel der Erfindung zweckmäßig ist, die insbesondere aus wenigstens einer den Flansch durchgreifenden und stirnseitig in den oberen Rand des Tankstutzens eingeschraubten Schraube besteht. In diesem Fall wird also die Befestigung des Halsstücks an dem Tankstutzen auch zur Befestigung des mit dem Halsstück verbundenen Einfüllstutzens herangezogen.

Gemäß einer alternativen Ausführungsform der Erfindung ist zur Befestigung der aus Halsstück und Einfüllstutzen gebildeten Baugruppe an einem aus Metall bestehenden Tank vorgeschlagen, daß zur Befestigung der aus Halsstück und Einfüllstutzen gebildeten Baugruppe an einem Metalltank der Einfüllstutzen außenseitig mit dem Tankkorpus verschweißt ist und der Flansch des Halsstückes zweiteilig mit zwei sich in einem Teilbereich überlappenden Teilflanschen ausgebildet ist, wobei der eine Teilflansch über den Rand fest mit dem Einfüllstutzen verbunden ist und der andere Teilflansch fest mit der den Einsatz umschließenden Wandung verbunden ist, und wobei der den Einsatz tragende Teilflansch auf dem Teilflansch auflagert und im Überlappungsbereich lösbar damit verbunden und aus dem Einfüllstutzen entnehmbar ist. Soweit also bei einem aus Metall bestehenden Tank der Einfüllstutzen mit dem Tankstutzen verschweißt ist, ist durch die Zweiteilung des Flansches des Halsstückes dafür Sorge getragen, daß der eine Teilflansch als Bestandteil des verschweißten Teils des Halsstückes mit dem Metalltank verschweißt ist und bleibt, während der andere Teilstück mit dem den Einsatz tragenden Teil des Halsstücks verbunden ist und somit nach Lösen einer entsprechenden Verbindung aus dem Einfüllstutzen entnehmbar ist. Somit ist auch bei einem Metalltank ein leichtes Auswechseln des Einsatzes gegeben.

Nach einem Ausführungsbeispiel der Erfindung ist vorgesehen, dass das Halsstück eine zylindrische Form mit einer den Einsatz wenigstens teilweise außen umschließenden Wandung aufweist und die Befestigungsmittel die Wandung des Halsstücks durchstoßen und in die Wandung des Einsatzes hineinreichen.

Alternativ kann vorgesehen sein, dass das Halsstück eine gestufte Form mit einem in seinem Außendurchmesser dem Innendurchmesser des Tankstutzens angepaßten oberen Zylinderabschnitt und mit einem daran unter Ausbildung einer nach Innen einspringenden umlaufenden Stufe anschließenden unteren Zylinderabschnitt mit einem dem zur Aufnahme der Zapfpistole eingerichteten Innendurchmesser des Einsatzstücks angepaßten Außendurchmesser aufweist derart, daß der Einsatz mit seinem Innendurchmesser auf den unteren Zylinderabschnitt des Halsstücks aufschiebbar ist und die Befestigungsmittel durch im Bereich der Stufe angeordnete Öffnungen stirnseitig in die Wandung des Einsatzes einbringbar sind. Hiermit ist der Vorteil verbunden, dass der obere Rand des gegebenenfalls aus Kunststoff bestehenden Einsatzes außerhalb des Einführbereichs der Zapfpistole liegt und durch die nach innen einspringende Stufe des Halsstücks geschützt ist, wobei die Zapfpistole beim Einführen in den Tankstutzen bzw. das Halsstück nur an der Stufe anschlagen kann.

Für eine andere Bauart von Tankverschlüssen mit einem in den Tankstutzen einzusetzenden und insbesondere der Aufnahme von Schraubverschlüssen dienenen Einfüllstutzen ist nach einem Ausführungsbeispiel der Erfindung vorgesehen, daß das Halstück als integraler Einfüllstutzen ausgebildet und in dem oberen Bereich seiner Wandung mit einem Innengewinde zum Einschrauben eines Verschlußdeckels versehen ist. In diesem Zusammenhang schließt der Erfindungsgedanke sowohl die einteilige Verbindung des das Innengewinde tragenden Bereichs des Halsstücks mit dem Befestigungsbereich für das Einsatzstück als auch eine zweiteilige Ausbildung mit einem das Innengewinde tragenden Teil und einem die Anbindung für das Einsatzstück tragenden Teil vor, wobei die Einzelteile in geeigneter Weise miteinander verbunden, beispielsweise verschweißt sind.

Insbesondere für die Ausführungsform des Halsstückes mit einem oberen und einem unteren Zylinderabschnitt kann nach einem Ausführungsbeispiel der Erfindung vorgesehen sein, daß das Innengewinde in dem oberen Zylinderabschnitt des als Einfüllstutzen ausgebildeten Halsstücks angeordnet ist.

Zur Befestigung eines gleichzeitig als Einfüllstutzen ausgebildeten Halsstücks kann vorgesehen sein, daß der obere Flansch des als Einfüllstutzen ausgebildeten Halsstücks den oberen Rand des Tankstutzens umgreifend umgebogen und daran befestigt ist.

Die Befestigung eines derartig ausgebildeten Halsstücks kann nach einem Ausführungsbeispiel der Erfindung für aus Metall bestehende Tanks dadurch verwirklicht werden, daß der umgebogene Flansch an seinem äußeren Rand außenseitig mit dem Tankstutzen des Tankkorpus verschweißt ist, während für die Befestigung an einem aus Kunststoff bestehenden Tank der umgebogene Flansch im Preßsitz mit dem oberen Rand des Tankstutzens verbunden sein kann.

Für die Anbindung eines Halsstückes bei einem Kunststofftank mittels einer Schraubverbindung kann insbesondere schon bei der Herstellung des Kunststofftanks vorbereitend Sorge getragen werden, und so ist nach einem der Ausführungsbeispiel der Erfindung vorgesehen, dass bei der Herstellung des Kunststofftanks am Tankstutzen ein Verstärkungsring mit einem den oberen Rand des Tankstutzens ausbildenden umlaufenden Flansch und einem in den Tankstutzen hineinreichenden Wandabschnitt in dem Kunststoff eingeschlossen wird, wobei die Befestigung der später in den Tankstutzen einzusetzenden Halterung an dem Flansch des Verstärkungsringes ausführbar ist. Zur besseren Verbindung des Verstärkungsrings mit dem Kunststofftank kann weiterhin vorgesehen sein, dass der Verstärkungsring auf der Außenseite seines Wandabschnitts mit davon abragenden und in das Kunststoffmaterial hineinragenden Laschen versehen ist.

Im Rahmen einer weiteren, einen kompakten Einsatz zur Aufnahme des Magneten bildenden Ausführungsform ist vorgesehen, dass der auswechselbar an dem Einfüllstutzen gehalterte Einsatz aus zwei ineinander einschiebbaren Teilen besteht, wobei Außenteil und Innenteil jeweils aus einem zylindrischen Abschnitt mit einem größeren Durchmesser und einem daran anschließenden zylindrischen Abschnitt mit einem geringeren Durchmesser bestehen und Außenteil und Innenteil passgenau ineinander einsteckbar sind, und wobei die Längserstreckung des den größeren Durchmesser aufweisenden zylindrischen Abschnitts des Innenteils zur Ausbildung eines Freiraums im Bereich der zwischen den Abschnitten unterschiedlichen Durchmessers bestehenden Stufen kürzer bemessen ist als die Längserstreckung des zugeordneten Abschnitts des Außenteils, wobei weiterhin vorgesehen sein kann, dass der Magnet in dem zwischen Innenteil und Außenteil im Bereich von deren Stufen gebildeten Freiraum angeordnet ist. Hiermit ist der Vorteil verbunden, dass die Montage des Magneten in dem Einsatzstück verbessert ist, weil der Magnet lediglich in den den größeren Durchmesser aufweisenden Abschnitt des Außenteils eingelegt und danach das Innenteil in das Außenteil eingesteckt werden muss, so dass der Magnet zwischen den Stufen von Innenteil und Außenteil liegt und insoweit von Innenteil und Außenteil vollständig eingeschlossen ist. Hierdurch ist auch ein Auswechseln des Magneten in einem Schadenfall leicht möglich, weil nur das Innenteil aus dem Außenteil herausgezogen werden muss, um den Magneten wieder zugänglich zu machen.

Die durch die Umhüllung des Magneten zwischen Innenteil und Außenteil bereits verwirklichte Abdichtung des Magneten gegen den Tank beziehungsweise gegen die in dem Tank befindliche Flüssigkeit wird nach einem Ausführungsbeispiel dadurch verbessert, dass an der im Außenteil gebildeten Stufe eine den bei in das Außenteil eingesetztem Innenteil zwischen den ineinandersteckenden Abschnitten mit kleinerem Durchmesser bestehenden Zwischenraum abdichtende Dichtung angeordnet ist, auf der der Magnet auflagert, und daß oberhalb des Magneten auf den Abschnitt kleineren Durchmessers des Innenteils eine weitere Dichtung aufgesteckt ist. Mit dieser Maßnahme sind die zwischen Innenteil und Außenteil jeweils bestehenden Ringspalte durch die vorgesehenen Dichtungen abgedichtet.

Bei diesem Ausführungsbeispiel ist vorgesehen, dass der Einsatz unter Verzicht auf eine gesonderte Halterung unmittelbar an dem Einfüllstutzen gehaltert ist, soweit vorgesehen ist, dass der Einsatz mit einem am oberen Rand seines Außenteils ausgebildeten Flansch auf einem an der Innenseite des Einfüllstutzens ausgebildeten Innenflansch auflagert und mit dem Einfüllstutzen verbunden ist.

Zur Verbesserung der Haltbarkeit des Einsatzes ist nach einem Ausführungsbeispiel der Erfindung vorgesehen, daß in die von Außenteil und Innenteil gemeinsam gebildete Aufnahmeöffnung des Einsatzes ein der Aufnahme der Zapfpistole dienender und die Zapfpistole beim Einstecken führender Schutzeinsatz aus einem hochschlagfesten, temperaturbeständigen Kunststoff eingesetzt ist, wobei in einer zweckmäßigen Weise vorgesehen sein kann, daß der Schutzeinsatz mit dem am Außenteil des Einsatzes ausgebildeten Flansch im Formschluss verbunden und dadurch am Einsatz festgelegt ist.

Soweit auch bei diesem Ausführungsbeispiel eine Befestigung des Einsatzes an einem aus Metall bestehenden Tankkorpus in Frage kommt, ist nach einem Ausführungsbeispiel vorgesehen, daß der den Einsatz halternde Einfüllstutzen den Tankstutzen übergreift und außenseitig mit dem Tankkorpus verschweißt ist.

Bei einem aus Kunststoff bestehenden Tankkorpus kann alternativ vorgesehen sein, dass ein Verstärkungsring schon bei der Herstellung des Kunststoff-Tankkorpus in den oberen Rand des Tankstutzens eingeschlossen wird, wobei der auf den Tankstutzen aufgesetzte Einfüllstutzen mit dem Verstärkungsring mittels Verschraubungen verbindbar ist. Hierzu kann vorgesehen sein, dass der Einfüllstützen mit dem an ihm ausgebildeten Innenflansch auf dem Verstärkungsring des Tankstutzens auflagert und die Verschraubungen unter Einschluss des Einsatzes der Befestigung des Einfüllstutzens auf dem Tankstutzen dienen. In einer zweckmäßigen Weise kann vorgesehen sein, dass zwischen dem Tankstutzen und dem Einfüllstutzen eine zusätzliche Dichtung angeordnet ist.

In der Zeichnung sind Ausführungsbeispiele der Erfindung wiedergegeben, welche nachstehend beschrieben sind. Es zeigen:
- Fig. 1: den Tankstutzen eines Fluidtanks mit aufgesetztem Einfüllstutzen und Einbauten im Schnitt für einen Kunststofftank,
- Fig. 2: die Halterung für den Fehlbetankungseinsatz im Schnitt,
- Fig. 3: die Halterung gemäß Figur 2 in einer Draufsicht,
- Fig. 4: die Halterung gemäß Figur 2 in einer anderen Ausführungsform,
- Fig. 5: die Halterung gemäß Figur 5 in einer Draufsicht,
- Fig. 6: den Tankstutzen gemäß Figur 1 für einen Metalltank,
- Fig. 7: den Einfüllstutzen gemäß Figur 6 mit Einbauten in einer Einzeldarstellung,
- Fig. 8: den Tankstutzen eines Fluidtanks mit einem als Einfüllstutzen ausgebildeten Halsstück im Schnitt,
- Fig. 9: das als Einfüllstutzen ausgebildete Halsstück gemäß Figur 4 in einer Einzeldarstellung,
- Fig. 10: den Gegenstand der Figur 9 mit einem lösbaren Einsatz,
- Fig. 11: ein an dem Fluidtank zu integrierender Verstärkungsring in einer Draufsicht,
- Fig. 12: der Verstärkungsring gemäß Figur 11 in einer Draufsicht,
- Fig. 13: ein den Magneten aufnehmender Einsatz in einer auseinander gezogenen, perspektivischen Darstellung,
- Fig. 14: die Festlegung des Einsatzes an einem bei einem Metall-Tankkorpus verwendeten Einfüllstutzen,
- Fig. 15: die Festlegung des Einsatzes an einem bei einem Kunststoff-Tankkorpus verwendeten Einfüllstutzen.

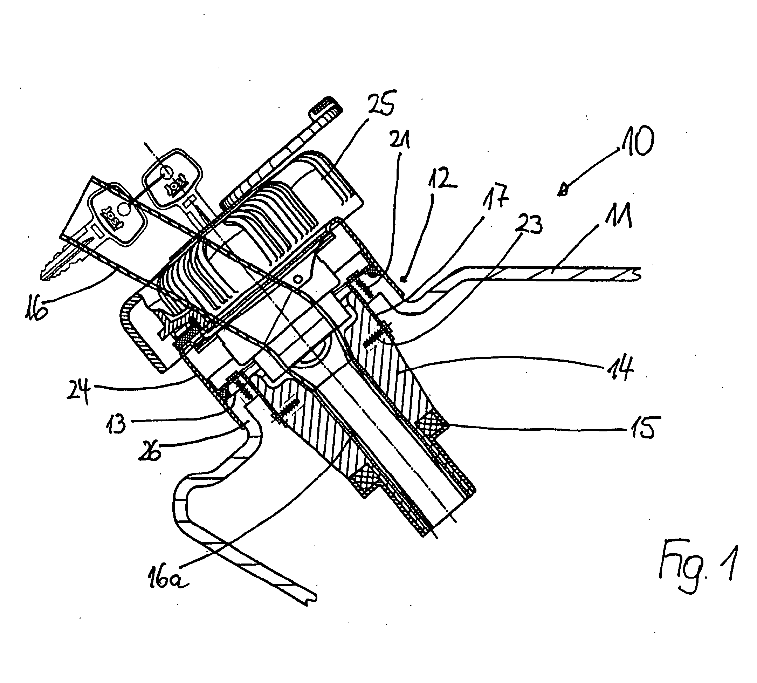

Bei dem in Figur 1 dargestellten Ausführungsbeispiel handelt es sich um einen aus Kunststoff bestehenden Flüssigkeitstank 10, der für die Aufnahme von Harnstoff vorgesehen ist, dessen Tankkorpus 11 einen Tankstutzen 12 aufweist, der in einem Halsansatz 26 angeordnet ist und einen oberen Rand 13 aufweist. Bei der in Figur 1 dargestellten Bauart ist auf dem Tankstutzen 12 ein gesonderter Einfüllstutzen 24 als Träger eines Verschlußdeckels 25 in einer noch zu beschreibenden Weise befestigt.

An dem Tankstutzen 12 ist zunächst ein Fehlbetankungseinsatz 14 in einer noch zu beschreibenden Weise gehaltert, welcher in seiner Wandung einen Ringmagnet 15 hält. Eine in den Tankstutzen 12 sowie in den Einsatz 14 einzusteckende Zapfpistole 16 reicht mit dem Rüssel 16a so tief in den Einsatz 14 hinein, daß der Ringmagnet 15 eine nicht weiter dargestellte Schließeinrichtung in dem Rüssel 16a beaufschlagen kann.

Der Einsatz 14 ist an einem als Halterung dienenden Halsstück 17 befestigt, wobei das Halsstück 17 mit einem oberen, umlaufenden Flansch 18 auf dem oberen Rand 13 des Halsansatzes 26 des Tankstutzens 12 auflagert und mit einer Wandung 19 innenseitig in den Tankstutzen 12 hineinragt.

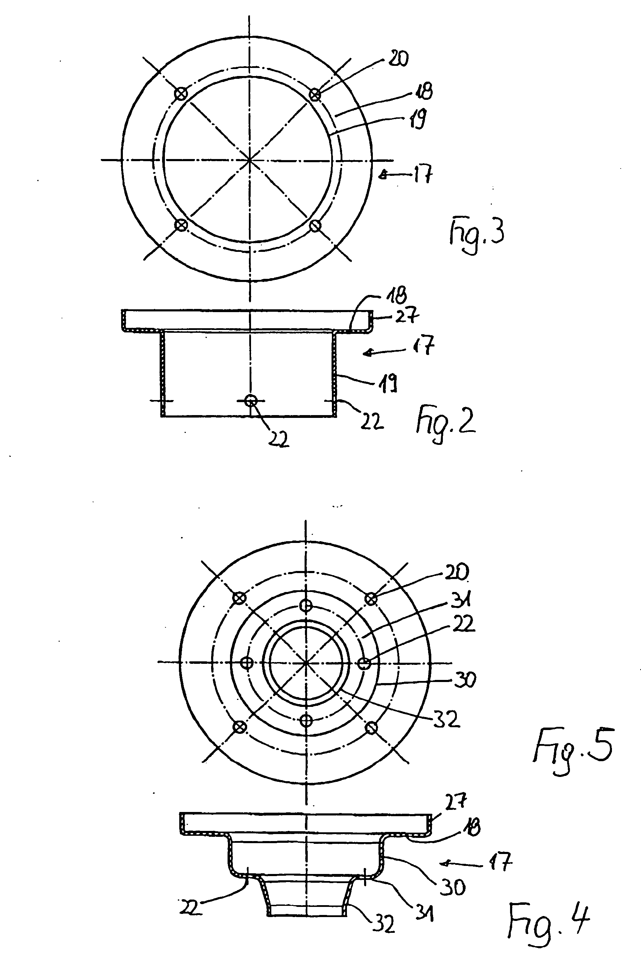

Wie sich aus dem in den Figuren 2 und 3 im einzelnen dargestellten und dem in Figur 1 gezeigten Ausführungsbeispiel entsprechenden Halsstück 17 ergibt, sind in dem Flansch 18 des Haltestückes 17 Schraublöcher 20 ausgebildet, durch welche Schrauben 21 in den oberen Rand 13 des Halsansatzes 26 des Tankstutzens 12 eingeschraubt sind, so daß das Halsstück 17 fest an dem aus Kunststoff bestehenden Tankkorpus 11 festgelegt ist. Weiterhin sind in der Wandung 19 des Halsstückes 17 Schraublöcher 22 angeordnet, durch welche Schrauben 23 gedreht sind, die bis in den Einsatz 14 bzw. dessen Wandung hineinreichen und so den Einsatz 14 an dem Halsstück 17 festlegen.

Bei dem in Figur 1 dargestellten Ausführungsbeispiel ist das an dem Tankstutzen 12 befestigte Halsstück 17 auch zur Befestigung des Einfüllstutzens 24 mit Deckel 25 herangezogen, indem das Halsstück 17 an dem äußeren umlaufenden Rand 27 seines oberen Flansches 18 mit dem außen um den Rand 27 gestülpten Einfüllstutzen 24 verbunden, vorzugsweise punktgeschweißt, ist, so daß im einzelnen eine aus Halsstück 17 und Einfüllstutzen 24 bestehende Baueinheit gebildet ist, die als ganze auf den Tankstutzen 12 aufsetzbar ist, bis der Flansch 18 des Halsstückes 17 auf dem oberen Rand 13 des Tankstutzens 12 aufliegt, so daß die beschriebene Verschraubung eingebracht werden kann.

In den Figuren 4 und 5 ist ein abgewandeltes Ausführungsbeispiel des Halsstückes 17 dargestellt, welches zweistufig ausgeführt ist. So schließt an den oberen Flansch 18 des Halsstückes 17 zunächst ein oberer Zylinderabschnitt 30 mit einem dem Innendurchmesser des Tankstutzens 12 angepaßten Außendurchmesser an, wobei der obere Zylinderabschnitt 30 an seinem inneren Ende in eine nach Innen einspringende umlaufende Stufe 31 übergeht, an die ein zweiter, unterer Zylinderabschnitt 32 anschließt, der in seinem Außendurchmesser an den Innendurchmesser des Einsatzes angepaßt ist derart, daß der Einsatz 14 über den unteren Zylinderabschnitt 32 des Halsstücks 17 überstülpbar ist, so daß der Einsatz 14 in seinem Befestigungsbereich an dem Halsstück 17 außenseitig des unteren Zylinderabschnitts 32 zu liegen kommt. Die für die Befestigung des Einsatzes vorgesehenen Schraublöcher 22 sind dabei in der Stufe 31 ausgebildet, so daß die entsprechend vorgesehenen Schrauben 23 von oben her in die Stirnseite des Einsatzes 14 einschraubbar sind. Das Halsstück 17 weist an seinem oberen Flansch 18 in der zu Figuren 2 und 3 beschriebenen Weise Schraublöcher 20 für Schrauben 21 auf, mittels derer das Halsstück 17 an dem Tankkorpus 11 befestigbar ist.

Mit der in den Figuren 4 und 5 dargestellten Ausführungsform ist der Vorteil verbunden, daß die Zapfpistole 16 mit ihrem Rüssel 16a beim Einführen allenfalls auf die Stufe 31 des metallischen Halsstücks 17 trifft, so daß Beschädigungen des Einsatzes 14 bei wiederholtem Gebrauch der Zapfpistole 16 ausgeschlossen sind.

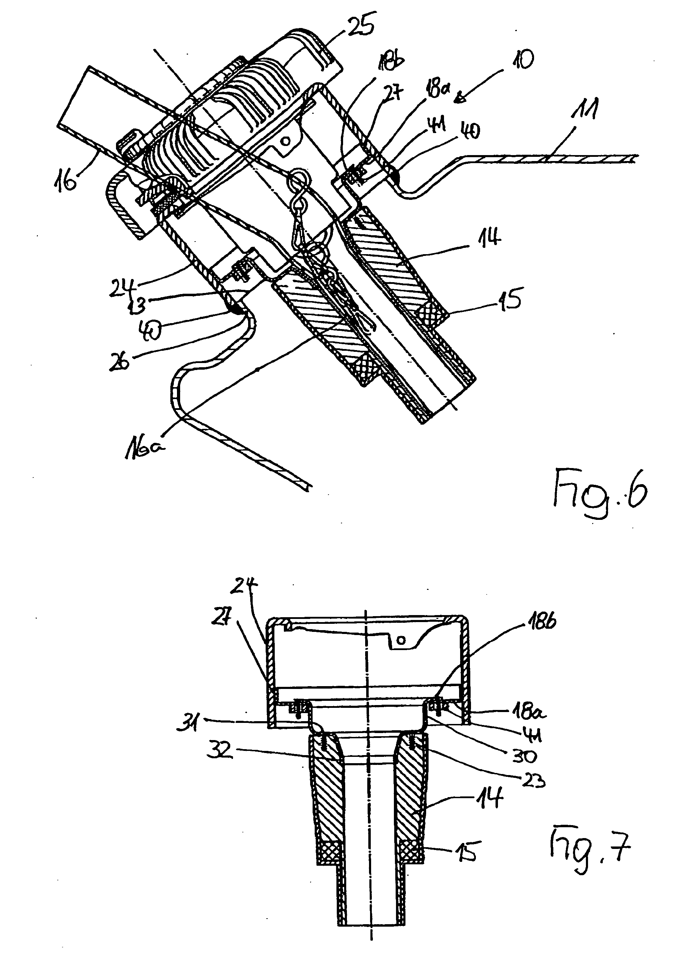

Das in Figuren 6 und 7 dargestellte Ausführungsbeispiel zeigt die Ausbildung der aus Halsstück 17 und Einfüllstutzen 24 gebildeten Baugruppe bei Anbringung dieser Baugruppe an einem Metalltank.

Insofern unterscheidet sich das in den Figuren 6 und 7 dargestellte Ausführungsbeispiel zunächst durch die Befestigung der auf den Tankstutzen 12 aufgesetzten Baugruppe, indem der Einfüllstutzen 24 auf seinem äußeren Umfang mit dem Metalltank 10 bzw. dessen Tankstutzen 12 durch Schweißstellen 40 verbunden ist. Der Aufbau des Halsstückes 17 entspricht bei dem dargestellten Ausführungsbeispiel der in Figur 4 bereits grundsätzlich dargestellten Ausführungsform mit dem oberen Flanschbereich 18, dem oberen Zylinderabschnitt 30, der nach innen einspringenden umlaufenden Stufe 31 und dem zweiten unteren Zylinderabschnitt 32; die Befestigung des Einsatzes 14 erfolgt dabei in der zu Figur 4 beschriebenen Weise durch Anbringung der entsprechenden Schrauben 23 im Bereich der Stufe 31 derart, daß die Schrauben 23 von oben her in die Stirnseite des Einsatzes 14 eingreifen.

Um trotz der unlösbaren, weil durch Verschweißen vorgenommenen Befestigung des Einfüllstutzens 24 mit dem Tankstutzen 12 den Einsatz 14 aus dem Einfüllstutzen 24 entnehmen zu können, ist der Flansch 18 geteilt ausgebildet, wobei der eine Teilflansch 18a über den Rand 27 fest mit dem Einfüllstutzen 24 verbunden ist und bleibt, während der innere Flanschbereich 18b als Bestandteil des den Einsatz 14 tragenden Teils des Halsstücks 17 von oben her auf dem Teilflansch 18a auflagert, so daß der Teilflansch 18b mit dem daran hängenden Einsatz 14 von dem Teilflansch 18a abhebbar und aus dem Einfüllstutzen 24 entnehmbar ist. Die Verbindung der beiden Teilflansche 18a, 18b kann beispielsweise durch eine Schraubverbindung 41 vorgenommen sein, wobei entweder das Gewinde in einen oder beide Teilflansche 18a, 18b eingeschnitten sein kann, oder aber auf der Unterseite des Teilflansches 18a eine zugeordnete Schraubmutter unlösbar befestigt ist, in die eine entsprechend durch den Teilflansch 18b geführte Schraube 41 einschraubbar ist. Auch andere geeignete Befestigungsmethoden sind alternativ denkbar.

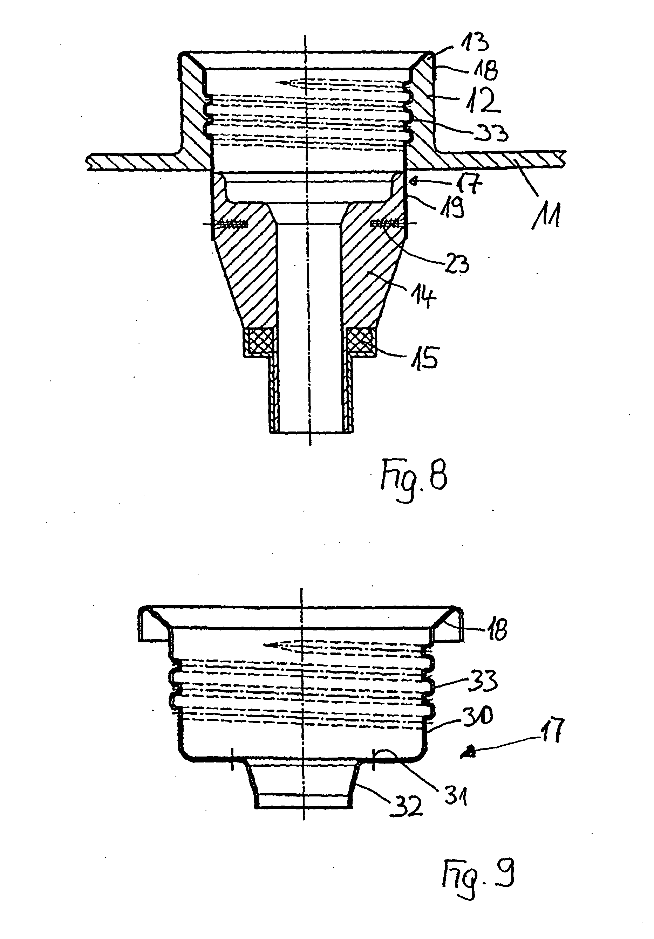

In den Figuren 8 und 9 ist eine andere Art der Anbindung eines Einfüllstutzens an einen Flüssigkeitstank 10 dargestellt und für die Anwendung der erfindungsgemäßen Halterung zugrundegelegt, bei der der Einfüllstutzen in den Tankstutzen 12 integriert wird und seinerseits ein Innengewinde zur Aufnahme eines Schraubdeckels aufweist.

Wie sich zunächst aus Fig. 8 ergibt, kann das im Grundsatz in Figuren 2 und 3 beschriebene Halsstück 17 integral als Einfüllstutzen ausgebildet sein, indem der obere Bereich der Wandung 19 des Halsstückes 17 mit dem Innengewinde 33 versehen ist. Die Befestigung eines derartig als Einfüllstutzen ausgebildeten Halsstückes 17 an dem Tankstutzen geschieht grundsätzlich derart, daß der obere Flansch 18 des Halsstückes 17 um den oberen Rand 13 des Tankstutzens herumgebogen und daran befestigt ist. Bei einem aus Metall bestehenden Tank kann die Befestigung dabei derart geschehen, daß der umgebogene Flansch 18 an seinem äußeren Rand außenseitig mit dem Tankstutzen 12 verschweißt, vorzugsweise punktverschweißt ist. Bei aus Kunststoff bestehenden Tanks kann die Anbindung des als Einfüllstutzen ausgebildeten Halsstücks 17 schon bei der Herstellung des Kunststofftanks dadurch erfolgen, daß der obere Flansch des Halsstücks 17 den oberen Rand 13 des Tankstutzens 12 im Preßsitz umgreift und dadurch mit diesem verbunden ist.

Das in Figur 9 dargestellte Ausführungsbeispiel zeigt die in Figur 4 dargestellte Ausführungsform des Halsstückes 17 in einer gleichzeitigen Ausbildung als Einfüllstutzen, wobei der obere Zylinderabschnitt 30 zur Ausbildung des Innengewindes 33 herangezogen ist.

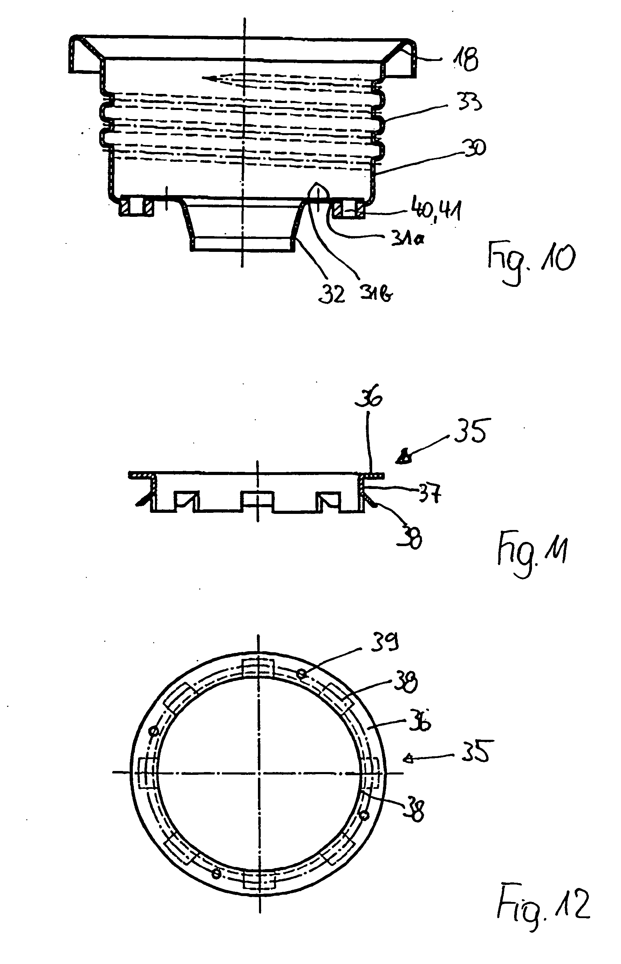

Soweit auch bei dieser Ausführungsform der Erfindung der Einsatz 14 aus dem Tankstutzen 12 zwecks Auswechslung bzw. Reparatur entnehmbar sein soll, ist gemäß dem in Figur 10 dargestellten Ausführungsbeispiel die Stufe 31 geteilt mit zwei sich in einem Teilbereich überlappenden Teilstufen 31 a, 31 b ausgeführt, wobei die lösbare Anordnung des Einsatzes über die getrennten Teilstufen 31a, 31b entsprechend dem zu Figur 6 und 7 beschriebenen Ausführungsbeispiel ausgebildet ist. So ist die untere Teilstufe 31 a einstückiger Bestandteil des aus dem umgebogenen Flansch 18 und aus dem oberen Zylinderabschnitt 30 bestehenden Teilabschnitts des Halsstückes 17, und soweit dieser Teilbereich über dem umgebogenen Flansch 18 fest mit dem Tankstutzen des Tanks verbunden ist, liegt die untere Teilstufe 31 a fest. Der Einsatz 14 wird in der zu Figuren 6 und 7 beziehungsweise zu Figur 4 beschriebenen Art und Weise von der Teilstufe 31b mit dem daran anschließenden unteren Zylinderabschnitt 32 getragen, wobei die Teilstufe 31b auf der Teilstufe 31a auflagert und mit dieser in der zu Figuren 6 und 7 beschriebenen Weise über eine Schraubverbindung 40, 41 verbunden ist. Nach Lösen der Schraubverbindung kann der Einsatz 14 nebst unterem Zylinderabschnitt 32 mit Teilflansch 31b von dem Teilflansch 31a abgenommen und aus dem Tankstutzen 12 entnommen werden.

In den Figuren 11 und 12 ist ein Verstärkungsring 35 dargestellt, wie er bei aus Kunststoff bestehenden Fluidtanks zur Verbesserung der Anbindung des Halsstückes 17 mittels einer Schraubverbindung (Fig. 1 bis 5) bereits bei der Herstellung des Fluidtanks 10 in den Halsansatz 26 bzw. den Tankstutzen 12 integriert werden kann. Der Verstärkungsring 35 besteht aus einem Wandabschnitt 37 mit einem an dessen oberen Rand umlaufenden Flansch 36, und er wird derart bei der Herstellung des Kunststofftanks 10 integriert, daß der Flansch 36 den oberen Rand 13 des Tankstutzens 12 ausbildet, während der Wandabschnitt 37 den inneren Randbereich des Tankstutzens 12 verstärkt. Zur besseren Verbindung des Verstärkungsringes 35 ragen nach außen vorstehende, aus dem Wandabschnitt 37 herausgebogene Laschen 38 hervor. In dem Flansch 36 sind weiterhin Bohrungen 39 zur Aufnahme der Befestigungsschrauben 21 für das Halsstück 17 ausgebildet.

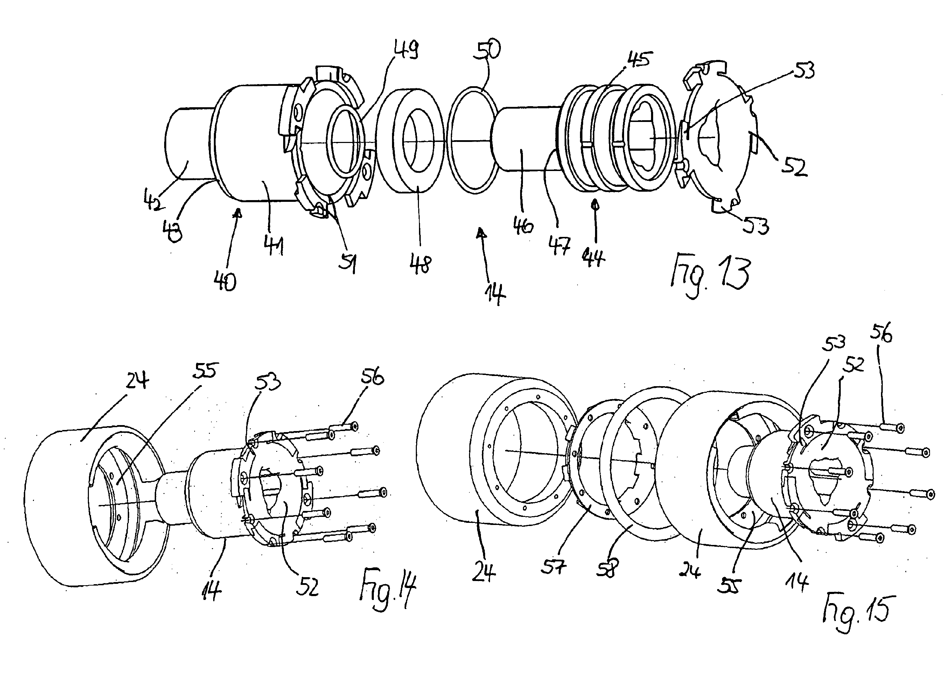

Wie sich aus Figur 13 ergibt, kann der Einsatz 14 zweiteilig ausgebildet sein mit einem Außenteil 40, welches zweistufig mit einem Abschnitt 41 größeren Durchmessers und einem daran anschließenden Abschnitt 42 kleineren Durchmessers ausgebildet ist, wobei zwischen den Abschnitten 41, 42 eine nach Innen einspringende Stufe 43 besteht.

Entsprechend zu der Form des Außenteils 40 ist ein Innenteil 44 vorgesehen, mit einem Abschnitt 45 größeren Durchmessers und einem Abschnitt 46 kleineren Durchmessers, wobei ebenfalls zwischen den Abschnitten 45 und 46 eine Stufe 47 ausgebildet ist. Innenteil 44 und Außenteil 40 sind dabei derart aufeinander abgestimmt, dass die beiden Teile 40, 44 passgenau ineinander einschiebbar sind. Dabei wird der Magnet 48 vor dem Einschieben des Innenteils 44 in den Abschnitt 41 größeren Durchmessers des Außenteils 40 eingelegt, so dass er auf der Stufe 43 des Außenteils 40 auflagert. Wird nun das Innenteil 44 in das Außenteil 40 eingeschoben, so legt sich die Stufe 47 des Innenteils 44 auf die Oberfläche des Magneten 48, so dass der Magnet zwischen den Stufen 43 und 47 festgelegt und im Übrigen vollständig von Innenteil 44 und Außenteil 40 umschlossen und dadurch gehalten ist. Um eventuelle, zwischen den Wandungen der Abschnitte 42 und 46 bzw. 41 und 45 von Außenteil 40 und Innenteil 44 bestehende Spalte abzudichten, ist in die Stufe 43 des Außenteils 40 eine Dichtung 49 eingelegt, die den Abschnitt 42 kleineren Durchmessers des Außenteils 40 gegen den auf der Stufe 43 aufliegenden Magneten abdichtet. Vor der Montage des Innenteils 44 ist eine zweite Dichtung 50 auf den Abschnitt 46 kleineren Durchmessers des Innenteils 44 aufgeschoben, die sich bei der Montage des Innenteils 44 in dem Außenteil 40 auf die Oberseite des Magneten 48 legt und insoweit eine Abdichtung zwischen dem Innenteil 44 und dem Außenteil 40 herbeiführt.

Zur Montage des Einsatzes 14 an dem Einfüllstutzen 24 (Figuren 14 und 15) ist an dem oberen Rand des Außenteils 40 ein Flansch 51 ausgebildet.

Zum Schutz des die Zapfpistole bei jedem Betankungsvorgang aufnehmenden Einsatzes 14 ist in die obere Öffnung des Einsatzes 14 zusätzlich ein aus einem hochschlagfesten und temperaturbeständigen Kunststoff bestehender Schutzeinsatz 52 eingesetzt, welcher auf seinem äußeren Umfang Formschlussgestaltungen 53 aufweist, die mit dem Flansch 51 des Außenteils 40 verriegeln, so dass sich eine einfache, jedoch zum Zwecke der Entnahme des Innenteils 44 aus dem Außenteil 40 lösbare Verbindung zwischen dem Schutzeinsatz 52 und dem Außenteil 40 ergibt.

Soweit gemäß Figur 14 der Einsatz 14 bei einem aus Metall bestehenden Tankkorpus zum Einsatz kommen soll, ist auf den Tankstutzen 12 des aus Metall bestehenden Tankkorpus 11 gemäß Figur 14 der Einfüllstutzen 24 aufgesetzt und außenseitig mit dem Tankkorpus 11 verschweißt. Der Einfüllstutzen 24 weist einen Innenflansch 57 auf, auf dem der Einsatz 14 mit seinem Außenflansch 51 auflagert, so dass eine Schraubverbindung mittels Schrauben 56 zwischen dem Einsatz 14 und dem Einfüllstutzen 24 herstellbar ist.

Soweit bei der in Figur 15 wiedergegebenen Alternative der Tankkorpus 11 aus Kunststoff besteht, ist in den oberen Rand des Tankstutzens 12 bereits bei der Herstellung des Tankkorpus ein Verstärkungsring 57 eingelegt, auf dem der Einfüllstutzen 24 befestigbar ist, indem der Einfüllstutzen 24 mit seinem Innenflansch 55 auf dem Verstärkungsring 57 auflagert und entsprechend verschraubbar ist. Hierbei ist zwischen dem Verstärkungsring 57 und dem Innenflansch 55 des Einfüllstutzens 24 noch eine Dichtung 58 vorgesehen. Auch bei diesem Ausführungsbeispiel lagert der Einsatz 14 mit seinem äußeren Flansch 51 auf dem Innenflansch 55 des Einfüllstützens 24 auf, wobei die vorgesehene Schraubverbindung über sowohl den Außenflansch 51 des Einsatzes 14, den Innenflansch 55 des Einfüllstutzens 24 und den Verstärkungsring 57 erfassende Schrauben 56 gegeben sein kann.

## Patentansprüche

1. Vorrichtung zur Vermeidung einer Fehlbetankung bei Kraftfahrzeugen mit einem an dem einen Bestandteil des Tankkorpus (10) bei einem Fluidtank in Kraftfahrzeugen bildenden Tankstutzen (11) anzubringenden Einsatz (14) zur Aufnahme einer an die Formgebung des Einsatzes (14) angepaßten Zapfpistole, wobei der ringförmige und an einem an dem Tankstutzen (12) des Tankkorpus (11) befestigten Einfüllstutzen (24) gehalterte Einsatz (14) in seiner Wandung einen die Zapfpistole umschließenden und mit einem in der Zapfpistole angeordneten Schließmechanismus zusammenwirkenden Magneten (15,48) aufnimmt, **dadurch gekennzeichnet, daß** der Einsatz (14) an einer als ein mit einer Wandung (19) in den Tankstutzen (12) einzusetzendes und sich mit einem an seinem oberen Ende ausgebildeten umlaufenden Flansch (18) am Tankstutzen (12) abstützendes Halsstück (17) ausgebildeten Halterung auswechselbar gehaltert ist, wobei in einem Bereich des Halsstücks (17) Öffnungen (22) zur Aufnahme von Befestigungsmitteln (23) für die auswechselbare Halterung des Einsatzes (14) an dem Halsstück (17) ausgebildet sind, und wobei der die Öffnungen (22) aufnehmende Bereich des Halsstücks (17) von dem Tankstutzen (12) lösbar ist.

2. Vorrichtung nach Anspruch 1, **dadurch gekennzeichnet, daß** der obere Flansch (18) des Halsstücks (17) an seinem äußeren umlaufenden Rand einen aufstehenden Rand (27) aufweist und das Halsstück (17) mit einem seinen Rand (27) übergreifenden Einfüllstutzen (24) als Träger eines Verschlußdeckels (25) zu einer auf den Tankstutzen (12) des Tankkorpus (11) aufzusetzenden Baueinheit verbunden ist.

3. Vorrichtung nach Anspruch 2, **dadurch gekennzeichnet, daß** zur Befestigung der aus Halsstück (17) und Einfüllstutzen (24) bestehenden Baueinheit an einem Kunststofftank der obere Flansch (18) des Halsstücks (17) auf dem oberen Rand (13) des Tankstutzens (12) aufsitzt und an dem Rand (13) befestigt ist.

4. Vorrichtung nach Anspruch 3, **dadurch gekennzeichnet, daß** die Befestigung aus einer Schraubverbindung besteht.

5. Vorrichtung nach Anspruch 3 oder 4, **dadurch gekennzeichnet, daß** die Schraubverbindung aus wenigstens einer den Flansch (18) durchgreifenden und stirnseitig in den oberen Rand (13) des Tankstutzens (12) eingeschraubten Schraube besteht.

6. Vorrichtung nach Anspruch 2, **dadurch gekennzeichnet, daß** zur Befestigung der aus Halsstück (17) und Einfüllstutzen (24) gebildeten Baugruppe an einem Metalltank der Einfüllstutzen (24) außenseitig mit dem Tankkorpus (11) verschweißt ist und der Flansch (18) des Halsstücks zweiteilig mit zwei sich in einem Teilbereich überlappenden Teilflanschen (18a, 18b) ausgebildet ist, wobei der eine Teilflansch (18a) über den Rand (27) fest mit dem Einfüllstutzen (24) verbunden ist und der andere Teilflansch (18b) fest mit der den Einsatz (14) umschließenden Wandung (19) verbunden ist, und wobei der den Einsatz (14) tragende Teilflansch (18b) auf dem Teilflansch (18a) auflagert und im Überlappungsbereich lösbar damit verbunden und aus dem Einfüllstutzen (24) entnehmbar ist.

7. Vorrichtung nach einem der Ansprüche 1 bis 6, **dadurch gekennzeichnet, daß** das Halsstück (17) eine zylindrische Form mit einer den Einsatz (14) wenigstens teilweise außen umschließenden Wandung (19) aufweist und die Befestigungsmittel (23) die Wandung (13) des Halsstücks (17) durchstoßen und in die Wandung des Einsatzes (14) hineinreichen.

8. Vorrichtung nach einem der Ansprüche 1 bis 6, **dadurch gekennzeichnet, daß** das Halsstück (17) eine gestufte Form mit einem in seinem Außendurchmesser dem Innendurchmesser des Tankstutzens (12) angepaßten oberen Zylinderabschnitt (30) und mit einem daran unter Ausbildung einer nach Innen einspringenden Stufe (31) anschließenden unteren Zylinderabschnitt (32) mit einem dem zur Aufnahme der Zapfpistole (16) eingerichteten Innendurchmesser des Einsatzes (14) angepaßten Außendurchmesser aufweist derart, daß der Einsatz (14) mit seinem Innendurchmesser auf den unteren Zylinderabschnitt (32) des Halsstücks (17) aufschiebbar ist und die Befestigungsmittel (23) durch im Bereich der Stufe (31) angeordnete Öffnungen (22) stirnseitig in die Wandung des Einsatzes (14) einbringbar sind.

9. Vorrichtung nach einem der Ansprüche 1 bis 8, **dadurch gekennzeichnet, daß** das Halsstück (17) als integraler Einfüllstutzen ausgebildet und in dem oberen Bereich seiner Wandung (19) mit einem Innengewinde (33) zum Einschrauben eines Verschlußdeckels versehen ist.

10. Vorrichtung nach Anspruch 8 und 9, **dadurch gekennzeichnet, daß** das Innengewinde (33) in dem oberen Zylinderabschnitt (30) des als Einfüllstutzen ausgebildeten Halsstücks (17) angeordnet ist.

11. Vorrichtung nach Anspruch 9 oder 10, **dadurch gekennzeichnet, daß** der obere Flansch (18) des als Einfüllstutzen ausgebildeten Halsstücks (17) den oberen Rand (13) des Tankstutzens (12) umgreifend umgebogen und daran befestigt ist.

12. Vorrichtung nach Anspruch 11, **dadurch gekennzeichnet, daß** bei einem Metalltank der umgebogene Flansch (18) des Halsstücks (17) an seinem äußeren Rand außenseitig mit dem Tankstutzen (12) des Tankkorpus (11) verschweißt ist.

13. Vorrichtung nach Anspruch 11, **dadurch gekennzeichnet, daß** bei aus Kunststoff bestehendem Tank der umgebogene Flansch (18) des Halsstücks (17) im Preßsitz mit dem Tankstutzen (12) verbunden ist.

14. Vorrichtung nach einem der Ansprüche 9 bis 13, **dadurch gekennzeichnet, dass** das Halsstück (17) eine Stufe (31) zur Halterung des Einsatzes (14) aufweist, wobei die Stufe (31) mit zwei sich in einem Teilbereich überlappenden Teilstufen (31a, 31 b) ausgebildet ist, wobei die eine Teilstufe (31a) über den oberen Zylinderabschnitt (30) integraler Bestandteil des umgebogenen Flansches (18) und damit am Tankstutzen (12) festgelegt ist und die andere Teilstufe (31b) den Einsatz (14) trägt, und wobei die Teilstufe (31 b) auf der Teilstufe (31a) auflagert und im Überlappungsbereich damit lösbar verbunden und aus dem mit dem Tankstutzen fest verbundenen Halsstück (17) entnehmbar ist.

15. Aus Kunststoff bestehender Flüssigkeitstank (10) unter Verwendung einer nach einem der Ansprüche 1 bis 11 oder 13 ausgebildeten Vorrichtung, bei welchem bei der Herstellung des Kunststofftanks am Tankstutzen (12) ein Verstärkungsring (35) mit einem den oberen Rand (13) des Tankstutzens (12) ausbildenden umlaufenden Flansch (36) und einem in den Tankstutzen (12) hineinreichenden Wandabschnitt (37) in dem Kunststoff eingeschlossen wird, wobei die Befestigung der Halterung (17) an dem Tankstutzen (12) an dem Flansch (36) des Verstärkungsringes (35) ausführbar ist.

16. Kunststofftank nach Anspruch 15, **dadurch gekennzeichnet, daß** der Verstärkungsring (35) auf der Außenseite seines Wandabschnitts (37) mit davon abragenden und in das Kunststoffmaterial hineinragenden Laschen (38) versehen ist.

17. Vorrichtung zur Vermeidung einer Fehlbetankung bei Kraftfahrzeugen mit einem an dem einen Bestandteil des Tankkorpus (10) bei einem Fluidtank in Kraftfahrzeugen bildenden Tankstutzen (11) anzubringenden Einsatz (14) zur Aufnahme einer an die Formgebung des Einsatzes (14) angepaßten Zapfpistole, wobei der ringförmige und an einem an dem Tankstutzen (12) des Tankkorpus (11) befestigten Einfüllstutzen (24) gehalterte Einsatz (14) in seiner Wandung einen die Zapfpistole umschließenden und mit einem in der Zapfpistole angeordneten Schließmechanismus zusammenwirkenden Magneten (15,48) aufnimmt, **dadurch gekennzeichnet, daß** der auswechselbar an dem Einfüllstutzen (24) gehalterte Einsatz (14) aus zwei ineinander einschiebbaren Teilen (40, 44) besteht, wobei Außenteil (40) und Innenteil (44) jeweils aus einem zylindrischen Abschnitt mit einem größeren Durchmesser (41, 45) und einem daran anschließenden zylindrischen Abschnitt (42, 46) mit einem geringeren Durchmesser bestehen und Außenteil (40) und Innenteil (44) passgenau ineinander einsteckbar sind, und wobei die Längserstreckung des den größeren Durchmesser aufweisenden zylindrischen Abschnitts (45) des Innenteils (44) zur Ausbildung eines Freiraums im Bereich der zwischen den Abschnitten unterschiedlichen Durchmessers bestehenden Stufen (43, 47) kürzer bemessen ist als die Längserstreckung des zugeordneten Abschnitts (41) des Außenteils (40).

18. Vorrichtung nach Anspruch 17, **dadurch gekennzeichnet, daß** der Magnet (48) in dem zwischen Innenteil (44) und Außenteil (40) im Bereich von deren Stufen (43, 47) gebildeten Freiraum angeordnet ist.

19. Vorrichtung nach Anspruch 17 oder 18, **dadurch gekennzeichnet, daß** an der im Außenteil (40) gebildeten Stufe (43) eine den bei in das Außenteil (40) eingesetztem Innenteil (44) zwischen den ineinandersteckenden Abschnitten (42, 46) mit kleinerem Durchmesser bestehenden Zwischenraum abdichtende Dichtung (49) angeordnet ist, auf der der Magnet (48) auflagert, und daß oberhalb des Magneten (48) auf den Abschnitt (46) kleineren Durchmessers des Innenteils (44) eine weitere Dichtung (50) aufgesteckt ist.

20. Vorrichtung nach einem der Ansprüche 17 bis 19, **dadurch gekennzeichnet, daß** der Einsatz (14) mit einem am oberen Rand seines Außenteils (40) ausgebildeten Flansch (51) auf einem an der Innenseite des Einfüllstutzens (24) ausgebildeten Innenflansch (55) auflagert und mit dem Einfüllstutzen (24) verbunden ist.

21. Vorrichtung nach einem der Ansprüche 17 bis 20, **dadurch gekennzeichnet, daß** in die von Außenteil (40) und Innenteil (44) gemeinsam gebildete Aufnahmeöffnung des Einsatzes (14) ein der Aufnahme der Zapfpistole dienender und die Zapfpistole beim Einstecken führender Schutzeinsatz (52) aus einem hochschlagfesten, temperaturbeständigen Kunststoff eingesetzt ist.

22. Vorrichtung nach Anspruch 21, **dadurch gekennzeichnet, daß** der Schutzeinsatz (52) mit dem am Außenteil (40) des Einsatzes (14) ausgebildeten Flansch (51) im Formschluss verbunden und **dadurch** am Einsatz (14) festgelegt ist.

23. Vorrichtung nach einem der Ansprüche 17 bis 22, **dadurch gekennzeichnet, dass** bei aus Metall bestehendem Tankkorpus (11) der Einfüllstutzen (24) den Tankstutzen (12) übergreift und außenseitig mit dem Tankkorpus (11) verschweißt ist.

24. Vorrichtung nach einem der Ansprüche 17 bis 22, **dadurch gekennzeichnet, dass** bei einem aus Kunststoff bestehenden Tankkorpus (11) ein Verstärkungsring (57) in den oberen Rand des Tankstutzens (12) eingeschlossen und der auf den Tankstutzen (12) aufgesetzte Einfüllstutzen (24) mit dem Verstärkungsring (57) mittels Verschraubungen (56) verbindbar ist.

25. Vorrichtung nach Anspruch 24, **dadurch gekennzeichnet, dass** der Einfüllstützen (24) mit dem an ihm ausgebildeten Innenflansch (55) auf dem Verstärkungsring (57) des Tankstutzens (12) auflagert und die Verschraubungen (56) unter Einschluss des Einsatzes (14) der Befestigung des Einfüllstutzens (24) auf dem Tankstutzen (12) dienen.

26. Vorrichtung nach Anspruch 24 oder 25, **dadurch gekennzeichnet, dass** zwischen dem Tankstutzen (12) und dem Einfüllstutzen (24) eine zusätzliche Dichtung (58) angeordnet ist.

## Claims

1. Device for avoiding incorrect refuelling in motor vehicles, comprising a cartridge (14) which is for receiving a fuel nozzle adapted to the shape of said cartridge (14) and which is to be applied to the tank connection (11) which forms a component of the tank body (10) in a fuel tank in motor vehicles, the annular cartridge (14), which is mounted on a filler neck (24) fastened to the tank connection (12) of the tank body (11), receiving in a wall of said cartridge a magnet (15, 48), which encloses the fuel nozzle and cooperates with a locking mechanism arranged in the fuel nozzle, **characterised in that** the cartridge (14) is mounted so as to be replaceable on a mounting which is configured as a neck piece (17), a wall (19) of which is to be inserted into the tank connection (12) and which is supported, by a circular flange (18) formed at the upper end thereof, against the tank connection (12), openings (22) being formed in a region of the neck piece (17) so as to receive fastening means (23) for the replaceable mounting of the cartridge (14) on said neck piece (17), and the region of the neck piece (17) in which the openings (22) are made being detachable from the tank connection (12).

2. Device according to claim 1, **characterised in that** the upper flange (18) of the neck piece (17) has a projecting rim (27) on the upper circular edge thereof, and the neck piece (17) is connected to a filler neck (24), which overlaps the rim (27) thereof and acts as a support for a cover lid (25), in order to form an assembly which is to be mounted on the tank connection (12) of the tank body (11).

3. Device according to claim 2, **characterised in that** in order to fasten to a plastics material tank the assembly which consists of the neck piece (17) and the filler neck (24), the upper flange (18) of the neck piece (17) is mounted on the upper edge (13) of the tank connection (12) and fastened to said edge (13).

4. Device according to claim 3, **characterised in that** the fastening consists of a screw connection.

5. Device according to either claim 3 or claim 4, **characterised in that** the screw connection consists of at least one screw, which penetrates the flange (18) and is screwed into the upper edge (13) of the tank connection (12) on the front side.

6. Device according to claim 2, **characterised in that** in order to fasten to a metal tank the assembly which consists of the neck piece (17) and the filler neck (24), the filler neck (24) is welded to the tank body (11) on the outside and the flange (18) of the neck piece is formed in two parts from two flange parts (18a, 18b) which overlap in a partial region, one flange part (18a) being connected fixedly to the filler neck (24) by the rim (27), the other flange part (18b) being connected fixedly with the wall (19) enclosing the cartridge (14), and the flange part (18b) which supports the cartridge (14) being mounted on the flange part (18a) and being detachably connected thereto in the overlap region and removable from the filler neck (24).

7. Device according to any one of claims 1 to 6, **characterised in that** the neck piece (17) has a cylindrical shape with a wall (19) which at least partially encloses the cartridge (14) on the outside, and the fastening means (23) penetrate the wall (13) of the neck piece (17) and extend into the wall of the cartridge (14).

8. Device according to any one of claims 1 to 6, **characterised in that** the neck piece (17) has a stepped form, with an upper cylinder portion (30), of which the outer diameter is adapted to the inner diameter of the tank connection (12), and a lower cylinder portion (32), which is connected to said upper cylinder portion to form an inwardly interlocking step (31) and of which the outer diameter is adapted to the inner diameter, constructed for receiving the fuel nozzle (16), of the cartridge (14) in such a way that the inner diameter of the cartridge (14) can be slid onto the lower cylinder portion (32) of the neck piece (17) and the fastening means (23) can be introduced into the wall of the cartridge (14) on the front side through openings (22) arranged in the region of the step (31).

9. Device according to any one of claims 1 to 8, **characterised in that** the neck piece (17) is formed as an integrated filler neck and is provided, in the upper region of the wall (19) thereof, with an inner thread (33) for screwing in a cover lid.

10. Device according to either claim 8 or claim 9, **characterised in that** the inner thread (33) is arranged in the upper cylinder portion (30) of the neck piece (17) which is formed as a filler neck.

11. Device according to either claim 9 or claim 10, **characterised in that** the upper flange (18) of the neck piece (17), which is formed as a filler neck, is bent around the upper edge (13) of the tank connection (12) so as to enclose it and is fastened thereto.

12. Device according to claim 11, **characterised in that** in a metal tank, the bent flange (18) of the neck piece (17) is welded by the outer edge thereof to the outside of the tank connection (12) of the tank body (11).

13. Device according to claim 11, **characterised in that** in a tank which is made of plastics material, the bent flange (18) of the neck piece (17) is connected to the tank connection (12) in an interference fit.

14. Device according to any one of claims 9 to 13, **characterised in that** the neck piece (17) has a step (31) for the mounting of the cartridge (14), the step (31) being formed with two step parts (31a, 31b) which overlap in a partial region, one of the step parts (31a) above the upper cylinder portion (30) being an integral component of the bent flange (18) and thus being fixed to the tank connection (12) and the other step part (31 b) supporting the cartridge (14), and the step part (31b), being mounted on the step part (31a) and detachably connected thereto in the overlap region and being removable from the neck piece (17), which is fixedly connected to the tank connection.

15. Fuel tank (10), which is made of plastics material and makes use of a device constructed in accordance with any one of claims 1 to 11 or 13, and in which on the tank connection (12), a reinforcement ring (35), comprising a circular flange (36) which forms the upper edge (13) of the tank connection (12) and comprising a wall portion (37) which penetrates into the tank connection (12), is incorporated into the plastics material during the production of said plastics material tank, allowing the mounting (17) on the tank connection (12) to be fastened to the flange (36) of the reinforcement ring (35).

16. Plastics material tank according to claim 15, **characterised in that** the reinforcement ring (35) is provided, on the exterior of the wall portion (37) thereof, with lugs (38) which project therefrom and penetrate into the plastics material.

17. Device for avoiding incorrect refuelling in motor vehicles, comprising a cartridge (14) which is for receiving a fuel nozzle fitted to the shape of said cartridge (14) and which is to be applied to the tank connection (11) which forms a component of the tank body (10) in a fuel tank in motor vehicles, the annular cartridge (14), which is mounted on a filler neck (24) fastened to the tank connection (12) of the tank body (11), receiving in a wall of said cartridge a magnet (15, 48), which encloses the fuel nozzle and cooperates with a locking mechanism arranged in the fuel nozzle, **characterised in that** the cartridge (14), which is mounted on the filler neck (24) so as to be replaceable, consists of two parts (40, 44) which can be slid into one another, the outer part (40) and inner part (44) each consisting of a cylindrical portion with a larger diameter (41, 45) and a cylindrical portion (42, 46) which has a smaller diameter and is attached thereto, the outer part and inner part being able to be inserted into each other so as to fit exactly, and the longitudinal extent of the cylindrical portion (45) of greater diameter of the inner part (44) being dimensioned so as to be shorter than the longitudinal extent of the corresponding portion (41) of the outer part (40), in order to form a free space in the region of the steps (43, 47) which are present between the portions of different diameters.

18. Device according to claim 17, **characterised in that** the magnet (48) is arranged in the free space which is formed between the inner part (44) and outer part (40), in the region of the steps (43, 47) thereof.

19. Device according to either claim 17 or claim 18, **characterised in that** on the step (43) which is formed in the outer part (40), there is arranged a seal (49), on which the magnet (48) is mounted and which seals the intermediate space which is present, when the inner part (44) is inserted into the outer part (40), between the portions (42, 46) of smaller diameter which can be inserted into one another, and **in that** a further seal (50) is mounted above the magnet (48), on the portion (46) of smaller diameter of the inner part (44).

20. Device according to any one of claims 17 to 19, **characterised in that** the cartridge (14) is mounted, by a flange (51) formed on the upper edge of the outer part (40) thereof, on an inner flange (55) formed on the interior of the filler neck (24), and is connected to the filler neck (24).

21. Device according to any one of claims 17 to 20, **characterised in that** a protective insert (52), which serves to receive the fuel nozzle and to guide the fuel nozzle when inserted, and which is made of an impact-resistant, temperature-resistant plastics material, is inserted into the receiving opening, formed by the outer part (40) and inner part (44) together, of the cartridge (14).

22. Device according to claim 21, **characterised in that** the protective insert (52) is positively connected to the flange (51) disposed on the outer part (40) of the cartridge (14), and is thus fixed to the cartridge (14).

23. Device according to any one of claims 17 to 22, **characterised in that** with a tank body (11) made of metal, the filler neck (24) overlaps the tank connection (12) and is welded to the tank body (11) on the outside.

24. Device according to any one of claims 17 to 22, **characterised in that** with a tank body (11) made of plastics material, a reinforcement ring (57) is incorporated into the upper edge of the tank connection (12), and the filler neck (24), which is mounted on the tank connection (12), can be connected to the reinforcement ring (57) by screw connections (56).

25. Device according to claim 24, **characterised in that** the filler neck (24) is mounted, by the inner flange (55) formed thereon, to the reinforcement ring (57) of the tank connection (12), and the screw connections (56), with the cartridge (14) incorporated, serve to fasten the filler neck (24) onto the tank connection (12)

26. Device according to either claim 24 or claim 25, **characterised in that** an additional seal (58) is provided between the tank connection (12) and the filler neck (24).

## Revendications

1. Dispositif destiné à empêcher un mauvais remplissage de réservoir dans des véhicules automobiles, comportant un insert (14), qui est destiné à être monté sur le manchon de réservoir (11), formant un élément du corps de réservoir (10) dans le cas d'un réservoir de fluide dans des véhicules automobiles, et qui est destiné à recevoir un pistolet de distribution de carburant adapté à la configuration de l'insert (14), sachant que dans la paroi de l'insert (14) annulaire, qui est maintenu sur une tubulure de remplissage (24) fixée sur le manchon de réservoir (12) du corps de réservoir (11), est logé un aimant (15, 48) entourant le pistolet de distribution de carburant et coopérant avec un mécanisme de fermeture monté sur le pistolet de distribution de carburant, **caractérisé en ce que** l'insert (14) est maintenu de manière amovible sur un support, réalisé sous la forme d'un élément à collet (17) avec une paroi (19) à insérer dans le manchon de réservoir (12) et prenant appui sur le manchon de réservoir (12) par un collet (18) périphérique réalisé au niveau de son extrémité supérieure, des orifices (22) étant réalisés dans une zone de l'élément à collet (17) en vue de recevoir des moyens de fixation (23) pour la fixation amovible de l'insert (14) sur l'élément à collet (17), et la zone de l'élément à collet (17), destinée à recevoir les orifices (22), pouvant être désolidarisée du manchon de réservoir (12).

2. Dispositif selon la revendication 1, **caractérisé en ce que** le collet (18) supérieur de l'élément à collet (17) comporte un bord saillant vertical (27) sur son bord périphérique extérieur, et l'élément à collet (17), en vue de former un module à poser sur le manchon de réservoir (12) du corps de réservoir (11), est relié à une tubulure de remplissage (24), enserrant son bord (27) par le dessus et réalisé sous forme de support pour un couvercle de fermeture (25).

3. Dispositif selon la revendication 2, **caractérisé en ce que**, en vue de la fixation du module, formé par l'élément à collet (17) et la tubulure de remplissage (24), sur un réservoir en matière plastique, le collet (18) supérieur de l'élément à collet (17) est posé sur le bord (13) supérieur du manchon de réservoir (12) et est fixé sur le bord (13).

4. Dispositif selon la revendication 3, **caractérisé en ce que** la fixation est formée par un assemblage vissé.

5. Dispositif selon la revendication 3 ou 4, **caractérisé en ce que** l'assemblage vissé est formé par au moins une vis, qui traverse le collet (18) et qui est vissée du côté frontal dans le bord (13) supérieur du manchon de réservoir (12).

6. Dispositif selon la revendication 2, **caractérisé en ce que** , en vue de la fixation du module, formé par l'élément à collet (17) et la tubulure de remplissage (24), sur un réservoir métallique, la tubulure de remplissage (24) est soudée sur le côté extérieur avec le corps de réservoir (11), et le collet (18) de l'élément à collet (17) est réalisé en deux parties avec deux collets partiels (18a, 18b) se chevauchant dans une zone partielle, l'un des collets partiels (18a) étant assemblé par l'intermédiaire du bord (27) de manière fixe avec la tubulure de remplissage (24) et l'autre collet partiel (18b) étant assemblé de manière fixe avec la paroi (19) entourant l'insert (14), et le collet partiel (18b) portant l'insert (14) étant posé sur le collet partiel (18a) et étant assemblé de manière amovible à celui-ci dans la zone de chevauchement et pouvant être retiré hors de la tubulure de remplissage (24).

7. Dispositif selon l'une quelconque des revendications 1 à 6, **caractérisé en ce que** l'élément à collet (17) a une forme cylindrique avec une paroi (19) entourant l'insert (14) au moins partiellement à l'extérieur, et les moyens de fixation (23) traversent la paroi (13) de l'élément à collet (17) et s'engagent dans la paroi de l'insert (14).

8. Dispositif selon l'une quelconque des revendications 1 à 6, **caractérisé en ce que** l'élément à collet (17) a une forme étagée avec une partie cylindrique supérieure (30), ajustée par son diamètre extérieur au diamètre intérieur du manchon de réservoir (12), et une partie cylindrique inférieure (32), qui est aboutée à ladite partie cylindrique supérieure moyennant la formation d'un décrochement (31) en retrait vers l'intérieur et qui a un diamètre extérieur ajusté au diamètre intérieur de l'insert (14), conçu pour recevoir le pistolet de distribution de carburant (16), de telle sorte que l'insert (14) peut être emmanché avec son diamètre intérieur sur la partie cylindrique inférieure (32) de l'élément à collet (17), et les moyens de fixation (23) peuvent être insérés, du côté frontal dans la paroi de l'insert (14), à travers des orifices (22) réalisés dans la zone du décrochement (31).

9. Dispositif selon l'une quelconque des revendications 1 à 8, **caractérisé en ce que** l'élément à collet (17) est réalisé sous la forme d'une tubulure de remplissage intégrale et comporte, dans la zone supérieure de sa paroi (19), un filetage intérieur (33) pour y visser un couvercle de fermeture.

10. Dispositif selon les revendications 8 et 9, **caractérisé en ce que** le filetage intérieur (33) est disposé dans la partie cylindrique supérieure (30) de l'élément à collet (17) réalisé sous la forme d'une tubulure de remplissage.

11. Dispositif selon la revendication 9 ou 10, **caractérisé en ce que** le collet (18) supérieur de l'élément à collet (17), réalisé sous la forme d'une tubulure de remplissage, est cintré de manière à enserrer le bord (13) supérieur du manchon de réservoir (12) et est fixé à celui-ci.

12. Dispositif selon la revendication 11, **caractérisé en ce que**, en présence d'un réservoir métallique, le collet (18) cintré de l'élément à collet (17) est soudé au niveau de son bord extérieur du côté extérieur avec le manchon de réservoir (12) du corps de réservoir (11).

13. Dispositif selon la revendication 11, **caractérisé en ce que**, en présence d'un réservoir réalisé en matière plastique, le collet (18) cintré de l'élément à collet (17) est assemblé par ajustement serré avec le manchon de réservoir (12).

14. Dispositif selon l'une quelconque des revendications 9 à 13, **caractérisé en ce que** l'élément à collet (17) comporte un décrochement (31) pour la fixation de l'insert (14), le décrochement (31) étant réalisé avec deux décrochements partiels (31a, 31b) se chevauchant dans une zone partielle, l'un des décrochements partiels (31a) étant, par l'intermédiaire de la partie cylindrique supérieure (30), une partie intégrale du collet (18) cintré et étant fixé par celle-ci au manchon de réservoir (12), et l'autre décrochement partiel (31b) portant l'insert (14), et le décrochement partiel (31b) étant posé sur le décrochement partiel (31a) et étant assemblé à ce dernier dans la zone de chevauchement et pouvant être retiré hors de l'élément à collet (17) relié de manière fixe au manchon de réservoir.

15. Réservoir de liquide (10), réalisé en matière plastique, moyennant l'utilisation d'un dispositif réalisé selon l'une quelconque des revendications 1 à 11 ou 13, dans lequel, lors de la réalisation du réservoir (12) en matière plastique, une bague de raidissement (35), avec un collet (36) périphérique formant le bord (13) supérieur du manchon de réservoir (12) et avec une partie de paroi (37) s'engageant dans le manchon de réservoir (12), est incorporée dans la matière plastique au niveau du manchon de réservoir (12), le support (17) pouvant être fixé sur le manchon de réservoir (12) par le collet (36) de la bague de raidissement (35).

16. Réservoir en matière plastique selon la revendication 15, **caractérisé en ce que** la bague de raidissement (35), sur la face extérieure de sa partie de paroi (37), est munie de pattes (38) qui sont en saillie sur celle-ci et s'engagent dans la matière plastique.

17. Dispositif destiné à empêcher un mauvais remplissage de réservoir dans des véhicules automobiles, comportant un insert (14), qui est destiné à être monté sur le manchon de réservoir (11), formant un élément du corps de réservoir (10) dans le cas d'un réservoir de fluide dans des véhicules automobiles, et qui est destiné à recevoir un pistolet de distribution de carburant adapté à la configuration de l'insert (14), sachant que dans la paroi de l'insert (14) annulaire, qui est maintenu sur une tubulure de remplissage (24) fixée sur le manchon de réservoir (12) du corps de réservoir (11), est logé un aimant (15, 48) entourant le pistolet de distribution de carburant et coopérant avec un mécanisme de fermeture monté sur le pistolet de distribution de carburant, **caractérisé en ce que** l'insert (14), maintenu de manière amovible sur la tubulure de remplissage (24), est formé par deux parties (40, 44) insérables l'une dans l'autre, la partie extérieure (40) et la partie intérieure (44) étant formée chacune par un tronçon cylindrique (41, 45) avec un diamètre plus grand et par un tronçon cylindrique (42, 46) abouté à ce dernier et ayant un plus petit diamètre, et la partie extérieure (40) et la partie intérieure (44) pouvant être enfichées de manière ajustée l'une dans l'autre, et la dimension longitudinale de la partie cylindrique (45) de plus grand diamètre de la partie intérieure (44) étant plus courte que la dimension longitudinale du tronçon (41) associé de la partie extérieure (40) en vue de réaliser un dégagement dans la zone des décrochements (43, 47) formés entre les tronçons de diamètre différent.

18. Dispositif selon la revendication 17, **caractérisé en ce que** l'aimant (48) est disposé dans le dégagement formé entre la partie intérieure (44) et la partie extérieure (40) dans la zone des décrochements (43, 47) de celles-ci.

19. Dispositif selon la revendication 17 ou 18, **caractérisé en ce que** sur le décrochement (43) formé dans la partie extérieure (40) est posée une garniture d'étanchéité (49), qui assure l'étanchéité de l'intervalle formé, lorsque la partie intérieure (44) est enfichée dans la partie extérieure (40), entre les tronçons (42, 46) enfichés l'un dans l'autre avec un diamètre plus petit, et sur laquelle est posé l'aimant (48), et **en ce que**, au-dessus de l'aimant (48), une garniture d'étanchéité (50) supplémentaire est enfichée sur le tronçon (46) de plus petit diamètre de la partie intérieure (44).

20. Dispositif selon l'une quelconque des revendications 17 à 19, **caractérisé en ce que** l'insert (14) est posé avec un collet (51), formé sur le bord supérieur de sa partie extérieure (40), sur un collet intérieur (55), réalisé sur le côté intérieur de la tubulure de remplissage (24), et est assemblé à la tubulure de remplissage (24).

21. Dispositif selon l'une quelconque des revendications 17 à 20, **caractérisé en ce que** dans l'orifice de réception de l'insert (14), formé conjointement dans la partie extérieure (40) et la partie intérieure (44), est inséré un élément de protection (52) réalisé en matière plastique résistant aux chocs élevés et résistant à la température, lequel est destiné à recevoir le pistolet de distribution de carburant et guide le pistolet de distribution de carburant au moment de son introduction.

22. Dispositif selon la revendication 21, **caractérisé en ce que** l'élément de protection (52) est assemblé par conjugaison de forme avec le collet (51) réalisé sur la partie extérieure (40) de l'insert (14) et, de ce fait, est fixé sur l'insert (14).

23. Dispositif selon l'une quelconque des revendications 17 à 22, **caractérisé en ce que**, en présence d'un corps de réservoir (11) réalisé en métal, la tubulure de remplissage (24) enserre le manchon de réservoir (12) par le dessus et est soudé du côté extérieur avec le corps de réservoir (11).

24. Dispositif selon l'une quelconque des revendications 17 à 22, **caractérisé en ce que,** en présence d'un corps de réservoir (11) réalisé en matière plastique, une bague de raidissement (57) est incorporée dans le bord supérieur du manchon de réservoir (12), et la tubulure de remplissage (24), posée sur le manchon de réservoir (12) peut être reliée à la bague de raidissement (57) par des assemblages vissés (56).

25. Dispositif selon la revendication 24, **caractérisé en ce que** la tubulure de remplissage (24), avec le collet intérieur (55) formé sur celle-ci, est posée sur la bague de raidissement (57) du manchon de réservoir (12), et les assemblages vissés (56), y compris l'insert (14), sont destinés à la fixation de la tubulure de remplissage (24) sur le manchon de réservoir (12).

26. Dispositif selon la revendication 24 ou 25, **caractérisé en ce qu'**une garniture d'étanchéité (58) supplémentaire est posée entre le manchon de réservoir (12) et la tubulure de remplissage (24).
